# DEMANDE DE BREVET EUROPEEN

(11) **EP 0 924 547 A1**
(43) Date de publication de la demande: **23.06.1999**
(21) Numéro de dépôt: 97122611.3
(22) Date de dépôt: 22.12.1997
(51) Int. Cl.: G02F 1/1333, G02F 1/1347, H01G 9/20

(54) **Procédé de fabrication de cellules électro-optiques, notamment à cristaux liquides**

(71) Demandeur: ASULAB S.A., CH-2501 Bienne (CH)
(72) Inventeur: Klappert, Rolf, 2003 Neuchâtel (CH); Künzi, Jean-Michel, 2000 Neuchâtel (CH)
(74) Mandataire: Patry, Didier Marcel Pierre

(57) **Abrégé**

L'invention concerne un procédé de fabrication collective d'une pluralité de cellules électro-optiques individuelles formées chacune de deux substrats extérieurs (4,8) et d'un substrat intercalaire (6) interposé entre les substrats extérieurs. Les substrats sont reliés entre eux par des cadres de scellement (14,16) pour former deux cavités recevant des cristaux liquides. Ce procédé comprend une étape consistant à réaliser une zone de moindre résistance (32) le long du contour de chaque double cellule individuelle dans la plaque intercalaire pour faciliter la division du lot en cellules individuelles au cours de l'étape de division du lot par rayage et cassure des substrats extérieurs.

## Description

La présente invention concerne un procédé de fabrication d'une pluralité de cellules électro-optiques ou photovoltaïques ayant au moins trois substrats et deux cavités remplies d'un liquide par exemple des cristaux liquides. Plus particulièrement l'invention concerne un procédé de fabrication collective d'un lot de telles cellules dans lequel l'étape de division du lot en cellules individuelles est facilitée.

Les doubles cellules à cristaux liquides sont bien connues dans l'état de la technique et sont destinées par exemple à former des dispositifs d'affichage d'images en couleur. Une telle double cellule, qui est par exemple décrite dans la demande de brevet WO 89/00300, comprend trois substrats parallèles, deux substrats extérieurs et un substrat intercalaire reliés deux à deux au moyen de deux cadres de scellement. Les faces du substrat intercalaire et respectivement des substrats extérieurs qui se trouvent en regard l'une de l'autre portent un ensemble d'électrodes et les deux cavités définies respectivement entre le substrat intercalaire et les deux substrats extérieurs sont remplies de cristaux liquides.

La fabrication de ce type de cellule est couramment faite selon deux procédés.

Selon le premier procédé, on fabrique deux lots de cellules classiques, c'est-à-dire à deux substrats et une cavité, les cellules de chaque lot comprenant les cristaux liquides souhaités. Les deux lots sont divisés en cellules individuelles et les cellules individuelles d'un lot sont assemblées par collage à l'aide d'une matière adhésive appropriée avec les cellules individuelles de l'autre lot.

Pour réaliser chacun de ces lots on prépare deux grandes plaques de verre ou de matière synthétique, on réalise sur les faces en regard de ces plaques un réseau de jeux d'électrodes et de pistes conductrices, on dépose sur l'une d'elles de la matière de scellement en ménageant une ouverture de remplissage pour chaque cellule du lot, la matière de scellement s'étendant autour de chaque jeu d'électrodes. On assemble ensuite les deux plaques pour former un ensemble comprenant plusieurs rangées de cellules ouvertes. On divise alors cet ensemble en bandes rectilignes par des techniques de rayage et cassure du verre (voir par exemple US-A-4 224 093) ou par sciage suivant des droites parallèles. Chaque cellule ayant une ouverture de remplissage le long d'un bord de la bande, on remplit alors les cellules et l'on scelle leurs ouvertures, puis on divise la bande en cellules individuelles rectangulaires suivant des droites perpendiculaires aux précédentes.

Un premier inconvénient de ce procédé réside dans le fait que la double cellule qui en résulte présente quatre substrats et par conséquent une épaisseur importante. Un autre inconvénient est l'augmentation de l'effet de parallaxe entre les deux couches de cristaux liquides en raison du doublement de l'épaisseur du substrat intercalaire qui est formé dans ce cas par deux plaques collées. Cela nuit donc de façon évidente à la qualité de l'image affichée. Par ailleurs ce procédé implique un grand nombre de manipulations, ce qui le rend laborieux et plus coûteux.

Selon le deuxième procédé, on fabrique des cellules à trois substrats une à une en raison de l'impossibilité de découper les trois substrats simultanément par les techniques traditionnelles de rayage et de sciage. Chaque étape de fabrication est donc à effectuer individuellement sur chaque cellule, ce qui rend la fabrication de ces cellules fastidieuse et naturellement plus coûteuse que si elle pouvait être faite par lots.

La présente invention a pour but de remédier aux inconvénients de l'art antérieur susmentionné en fournissant un procédé de fabrication collective dans lequel on réalise en un seul lot une pluralité de cellules comprenant au moins trois substrats, ce lot pouvant ensuite être divisé en cellules individuelles de façon aisée, peu coûteuse et sans risque d'endommagement des cellules individuelles.

A cet effet, l'invention a pour objet un procédé de fabrication collective d'une pluralité de cellules électro-optiques ou photovoltaïques individuelles multiples, chaque cellule comportant :
- au moins deux cavités remplies d'un liquide et délimitées chacune par un cadre de scellement disposé entre un substrat extérieur et un substrat intercalaire
- des électrodes ménagées sur la surface de chaque substrat tournée vers l'autre substrat,
   le procédé étant caractérisé en ce qu'il comporte au moins les étapes suivantes:
   (a) se munir d'au moins une plaque intercalaire commune à toutes les cellules et dans laquelle le substrat intercalaire de chaque cellule sera formé, et de première et deuxième plaques extérieures également communes à toutes les cellules et dans lesquelles seront formés respectivement les deux substrats extérieurs, la plaque intercalaire et au moins la première ou la deuxième plaque extérieure étant transparentes;
   (b) former sur les faces des première et deuxième plaques extérieures et de la plaque intercalaire destinées à venir en regard l'une de l'autre un réseau de jeux d'électrodes, chaque jeu d'électrodes étant associé à une cellule individuelle;
   (c) déposer sur au moins une desdites faces destinées à venir en regard l'une de l'autre une matière de scellement pour former une pluralité de cadres de scellement, chacun d'eux étant associé à une cellule individuelle;
   (d) réaliser une zone de moindre résistance le long du contour de chaque cellule individuelle dans la plaque intercalaire;
   (e) combiner la plaque intercalaire à chacune des première et deuxième plaques extérieures de sorte que lesdits réseaux d'électrodes portés par les première et deuxième plaques extérieures coopèrent avec les réseaux d'électrodes portés par la plaque intercalaire;
   (f) assujettir les première et deuxième plaques à la plaque intercalaire à l'aide de la matière de scellement;
   (g) former des rayures délimitant le contour de chaque cellule individuelle sur la surface extérieure des première et deuxième plaques extérieures;
   (h) diviser le lot en cellules individuelles par cassure des première et deuxième plaques extérieures et de la plaque intercalaire le long du contour de chaque cellule;
   (i) remplir avec un liquide les cavités de chaque cellule individuelle, les cavités étant définies par les première et deuxième plaques, la plaque intercalaire et les cadres de scellement.

Grâce à ces caractéristiques, la fabrication collective d'un lot de cellules comprenant une ou plusieurs plaques destinées à former des substrats intercalaires non accessibles depuis l'extérieur est rendue possible, l'étape de séparation du lot en cellules individuelles pouvant par ailleurs être réalisée de façon classique par les techniques de rayage et de cassure des plaques extérieures. En effet, l'application de la force sur les plaques extérieures pour les casser selon les lignes de rayage entraîne également la rupture de la plaque ou des plaques intercalaires dans la zone de moindre résistance de celles-ci et par conséquent la séparation du lot en cellules individuelles. Le cas échéant, les bords des substrats intercalaires des cellules pourront être ébavurés.

Selon un mode de réalisation avantageux, la zone de moindre résistance mécanique est formée par découpage d'une fente continue ou discontinue le long du contour de chaque cellule individuelle de sorte qu'une partie centrale formant le substrat intercalaire est reliée au reste de la plaque intercalaire par au moins un pont de matière et de préférence quatre ponts de matière.

La présence de ces ponts permet de réaliser un compromis entre la résistance mécanique nécessaire pour que la ou les plaques intercalaires puissent subir les différentes opérations de traitement et de manipulation préalables à l'assemblage et la fragilité nécessaire pour une séparation aisée du lot en cellules individuelles à l'étape de division.

D'autres caractéristiques et avantages de la présente invention apparaîtront dans la description suivante d'un mode de réalisation préféré, présenté à titre d'exemple non limitatif en référence aux dessins annexés, dans lesquels :
- la figure 1 est une vue schématique partielle éclatée d'un lot de doubles cellules d'affichage à cristaux liquides (LCD) en cours de fabrication selon la présente invention,
- la figure 2 est une vue schématique en coupe transversale de la plaque intercalaire selon la ligne II-II de la figure 1,
- la figure 3 est une vue partielle de dessus d'un lot après l'étape (g) de formation de rayures;
- la figure 4 et une vue schématique en plan d'une double cellule détachée du lot de la figure 1 et partiellement arrachée dans ses deux coins supérieurs; et
- les figures 5 et 6 sont des vues schématiques en coupe transversale d'une double cellule détachée du lot de la figure 1 suivant respectivement les lignes V-V et VI-VI de la figure 4.

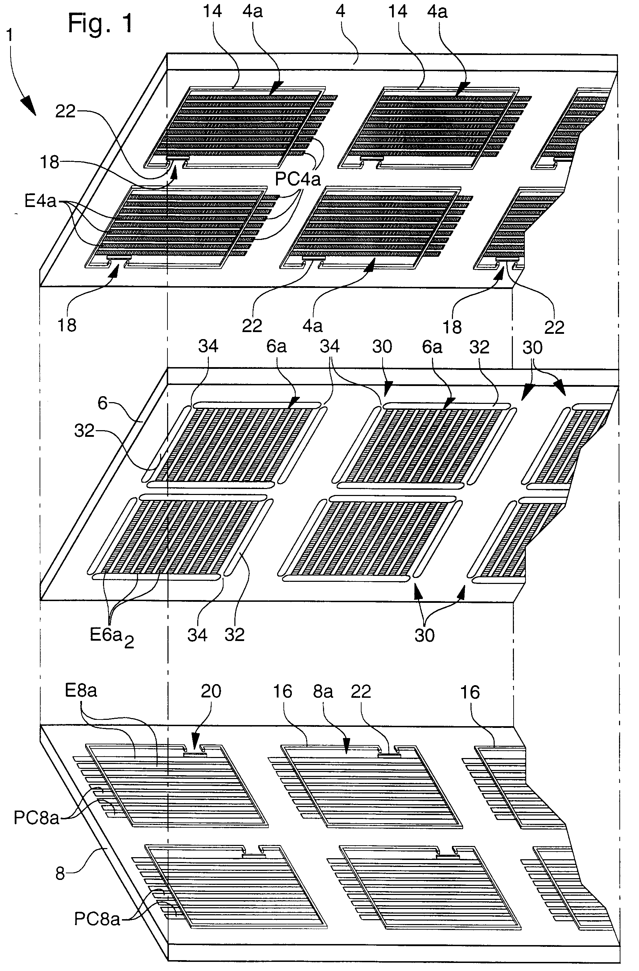

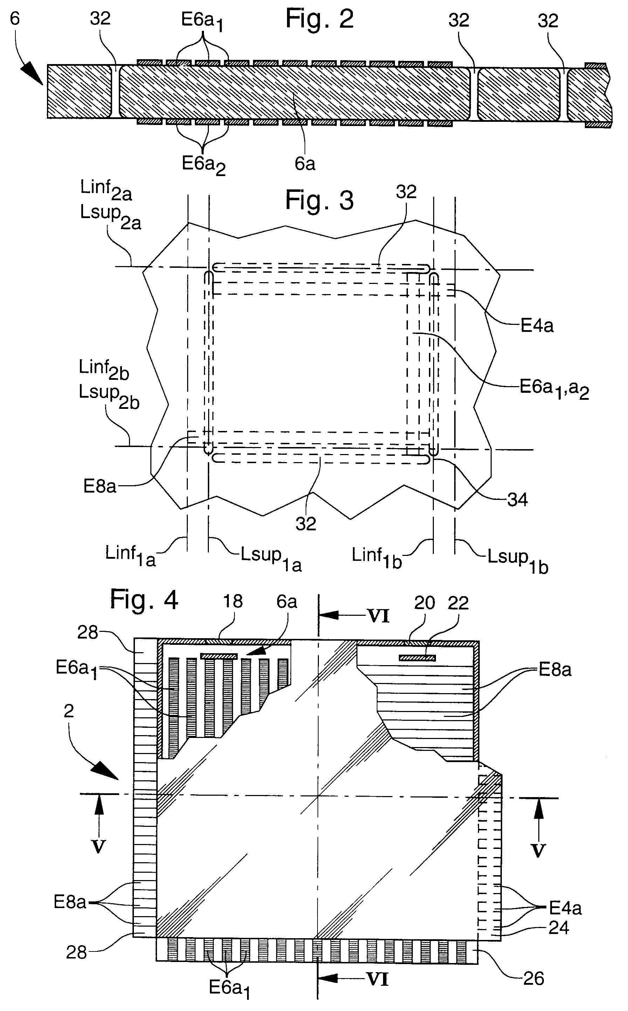

En se référant notamment à la figure 1, on voit un ensemble 1 de doubles cellules LCD 2 (figure 4) en cours de fabrication, toutes ces cellules étant définies ensemble par trois plaques superposées, à savoir deux plaques extérieures 4 et 8 et une plaque intercalaire 6. Les plaques extérieures 4 et 8 sont communes à toutes les cellules 2 et sont destinées à former respectivement les substrats supérieurs et inférieurs 4a et 8a de chaque cellule individuelle. La plaque 6 est également commune à toutes les cellules 2 et est destinée à former le substrat intercalaire 6a de chaque cellule individuelle 2.

La plaque 6 et au moins la plaque 4 sont transparentes. Dans l'exemple illustré les trois plaques 4, 6, et 8 sont transparentes et sont formés par exemple des plaques de verre. Bien entendu d'autre matériaux tels que des matériaux synthétiques peuvent être envisagés.

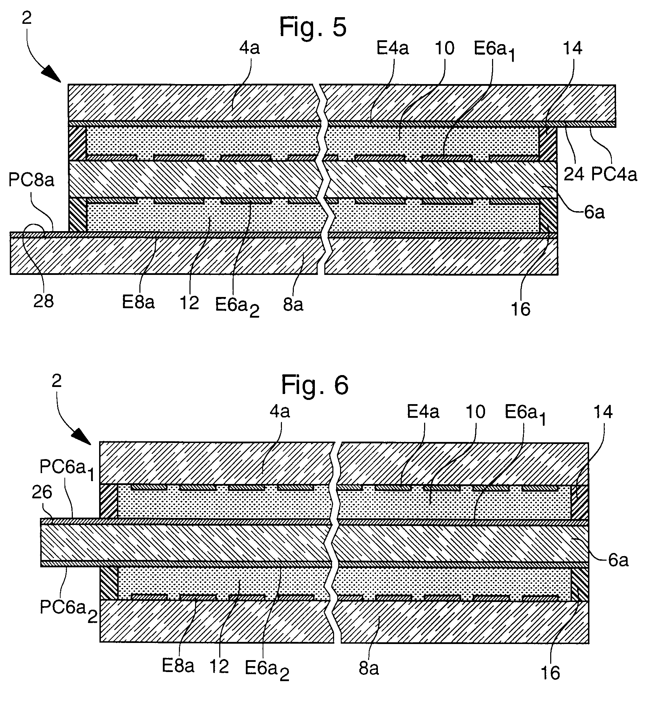

En se référant aussi aux figures 5 et 6 on voit que chaque double cellule 2 comporte deux cavités 10 et 12 destinées à contenir chacune un type de cristaux liquides. Ces deux cavités sont définies par les substrats 4a et 6a respectivement 6a et 8a et des cadres de scellement respectifs 14, 16 qui fixent les plaques 4 et 8 sur la plaque 6. Les cadres de scellement 14 et 16 suivent le contour extérieur de la surface active de chaque cellule 2 et dans l'ensemble représenté à la figure 1, les cadres de scellement 14 et 16 ont une configuration rectangulaire. Ces cadres sont formés de façon classique par de la matière de scellement. On voit également que des ouvertures de remplissage 18, 20 sont ménagées respectivement dans les cadres de scellement 14, 16 de chaque cellule 2 en regard d'une petite paroi 22 servant à bloquer le bouchon de colle utilisé pour sceller les ouvertures 18 et 20 après remplissage des cellules.

Comme cela sera décrit précisément ci-après et de manière à faciliter le remplissage des cellules 2, les ouvertures 18, 20 sont ménagées le long d'un même bord de chaque cellule 2 et dans des coins opposes.

Les surfaces en regard des substrats 4a et 6a comprennent chacune un jeu d'électrodes transparentes parallèles E4a et E6a₁, ces jeux étant orientés perpendiculairement l'un par rapport à l'autre. De même, les surfaces en regard des substrats 8a et 6a comprennent chacune un jeu d'électrodes transparentes parallèles E8a et E6a₂, ces jeux orientés perpendiculairement l'un par rapport à l'autre. Pour des raisons les jeux E6a₁ appliqués sur la face de la plaque 6 se trouvant en regard de la plaque 4 ont été omis à la figure 1. Cet agencement croisé des électrodes permet de définir entre le substrat 4a et 6a, respectivement entre le substrat 6a et 8a, deux matrices de pixels dont les pixels sont situés au point de croisement des électrodes respectives de chacune de ces matrices. En appliquant une tension de commande sur des électrodes croisées d'une même matrice il est possible de modifier les conditions optiques des cristaux liquides situés au point de croisement considéré, comme cela est bien connu de l'homme de métier. Chaque électrode est formée d'une bande conductrice déposée par les techniques classiques de photolithographie et est de préférence réalisée en oxyde d'indium-étain (ITO).

Dans les figures 4, 5 et 6, on comprend également que chaque cellule 2 comporte trois bords rectilignes 24, 26, et 28 où les substrats 4a, 6a et 8a font respectivement saillie latéralement par rapport aux deux autres pour laisser apparaître près du bord une série de plages de contact PC4a, PC6a₁, PC6a₂, et PC8a formées par des prolongements des électrodes E4a, E6a_{1,} E6a₂ et E8a au-delà des cadres de scellement 14 et 16. Ces plages de contact servent de connexions extérieures pour ces électrodes. Le reste du contour extérieur de la cellule 2, un seul bord dans l'exemple représenté, est au même endroit pour les trois plaques de verre 4, 6 et 8.

On notera qu'à la figure 4 le substrat 4a a été partiellement arraché dans le coin gauche pour laisser apparaître les électrodes E6a₁. Les substrats 4a et 6a on quant à eux été partiellement arraché dans le coin supérieur droit pour laisser apparaître les électrodes E8a.

La fabrication des cellules LCD 2 s'effectue de préférence de la manière suivante. Les plaques 4 et 8 sont revêtues de manière classique, chacune sur une de leurs faces, de leurs jeux d'électrodes E4a respectivement E8a chacun de ces jeux étant associé à une cellule individuelle. La plaque 6 est quant à elle revêtue sur ses deux faces de jeux d'électrodes E6a₁ et E6a₂. Les jeux d'électrodes E4a de la plaque 4 sont destinés à venir en regard des jeux d'électrodes E6a₁ de la plaque 6, tandis que les jeux d'électrodes E8a de la plaque 8 sont destinés à venir en regard des jeux d'électrodes E6a₂ de la plaque 6. Le cas échéant, des couches d'alignement ou d'autres éléments tels que des filtres ou couches diélectriques (non représentés) seront également déposés par-dessus ces jeux d'électrodes. Les techniques de dépôt des électrodes et de ces couches sont bien connues de l'homme de métier et ne seront par conséquent pas décrites.

On comprendra également que les plages de contact évoquées plus haut sont réalisées en même temps que les électrodes.

La matière destinée à former les cadres de scellement 14 et 16 ainsi que les parois 22 est appliquée sur les faces des plaques 4 et 8 portant les électrodes. Il est bien évident que cette matière pourrait être appliquée uniquement sur les faces de la plaque 6 portant les jeux d'électrodes ou encore que cette matière soit appliquée partiellement sur chacune des faces en regard des plaques 4, 6 et 8.

Dans l'exemple représenté, on remarquera que les cadres de scellement 14 et 16 ne circonscrivent pas complètement les réseaux E4a, E6a_{1,} E8a et E6a₂ auxquels ils sont associés, et en particulier qu'ils sont ménagés pour qu'une portion PC4a, PC6a_{1,} PC8a et PC6a₂ des électrodes E4a, E6a_{1,} E8a et E6a₂ s'étende latéralement au-delà des cadres de scellement 14 et 16 et forment les plages de contact décrites plus haut.

Selon une étape du procédé de fabrication de l'invention, on réalise une ou plusieurs zones 30 de moindre résistance mécanique le long du contour de chaque cellule individuelle dans la plaque 6 dans laquelle seront formés les substrats intercalaires des cellules individuelles terminées. Les zones 30 sont formées selon un mode de réalisation par un découpage le long du contour de chaque cellule d'une ou plusieurs fentes 32 continues, de sorte que la partie centrale formant le substrat 6a est relié au reste de la plaque 6 par au moins un pont de matière 34, et de préférence quatre ponts 34 comme cela est représenté aux figures 1 et 3. La largeur et longueur des ponts reliant les substrats 6a au reste de la plaque 6 dépendra essentiellement de l'épaisseur de la plaque 6. A titre d'exemple pour une plaque 6 ayant une épaisseur d'environ 0,3 à 1 mm, la longueur totale des ponts, c'est-à-dire la distance entre les extrémités de fentes consécutives est comprise entre 0,3 mm et 2 mm et leur largeur est de W mm.

On réalise le découpage de ces fentes de préférence en une seule étape de travail au moyen d'une machine de découpage à jet d'eau à très haute pression, de préférence à commande automatique. Le jet d'eau et la buse qui le produit sont de préférence stationnaires, tandis que la machine déplace la plaque 6 dans un plan de façon que le jet suive la trajectoire à découper sur le lot. Toutefois des techniques employant un jet mobile sont aussi utilisables. Il va de soi que d'autres moyens peuvent être mis en oeuvre pour réaliser ces fentes, on pourra par exemple utiliser des machines de découpage à jet de sable ou au laser (CO2 ou excimer).

Dans le cas où les fentes sont réalisées après le dépôt des jeux d'électrodes sur la plaque 6, on protégera, le cas échéant, les deux surfaces de cette plaque par exemple par une couche de résine photosensible déposée et éliminée classiquement.

Selon une variante de réalisation non représentée, la zone de moindre résistance est formée par découpage, le long du contour de chaque cellule, d'une pluralité de fentes faiblement espacées les unes des autres à la façon de pointillés. Il est bien entendu que l'on peut envisager tout type de forme ménageant une zone de faible résistance mécanique le long du contour de la cellule. On pourra par exemple également prévoir de graver sur une ou les deux faces de la plaque 6 des rainures suivant le contour de la cellule de sorte que les substrats 6a soient retenus au reste de la plaque 6 par une paroi de très faible épaisseur, cette dernière étant juste suffisante pour subir les contraintes imposées à la plaque au cours des étapes de traitement préliminaires sans se casser.

Une fois les zones 30 de moindre résistance mécanique réalisées, la plaque 6 est combinée à chacune des plaques 4 et 8 de sorte que les jeux d'électrodes portés par les plaques 4 et 8 s'alignent ou coopèrent avec les jeux d'électrodes qui leur sont associés, portés par la plaque 6. Les plaques 4 et 8 sont alors assujetties à la plaque 6 à l'aide de la matière de scellement formant les cadres 14 et 16.

Selon un mode de réalisation, on divise ensuite l'ensemble 1 en cellules individuelles 2. Pour ce faire, on forme des rayures parallèles délimitant le contour de chaque cellule individuelle sur la surface extérieure des plaques 4 et 8. Plus particulièrement, on forme sur la plaque 4 une première série de rayures parallèles suivant des lignes désignées respectivement Lsup1a et Lsup1b et une deuxième série de rayures parallèles suivant des lignes Lsup2a et Lsup2b perpendiculaires aux lignes Lsup1a. On forme également sur la plaque 8 une troisième série de rayures parallèles suivant des lignes Linf1a et Linf1b et une deuxième série de rayures parallèles suivant des lignes Linf2a et Linf2b perpendiculaires aux lignes Linf1a. Dans l'exemple illustré, ces lignes sont parallèles deux à deux aux côtés des cadres de scellement 14 et 16 et s'étendent bien entendu en dehors des limites des cadres de scellement auxquels elles sont associées. Toutes ces lignes sont représentées par des traits mixtes à la figure 3.

Les lignes Lsup1a s'étendent sensiblement au-dessus des fentes 32 de la plaque 6, tandis que les lignes Lsup1b sont sensiblement décalées latéralement vers l'extérieur des cellules (vers la droite à la figure 3) par rapport aux fentes 32 afin de ménager le bord rectiligne 24 où la plaque 4 fait saillie latéralement par rapport aux deux autres plaques 6 et 8.

Les lignes Lsup2a et Linf2a s'étendent respectivement sensiblement au-dessus des fentes 32 dans les plaques 6 et 8, tandis que les lignes Lsup2b et Linf2b sont respectivement sensiblement décalées latéralement vers l'intérieur des cellules par rapport aux fentes 32 afin de dégager le bord rectiligne 26 où la plaque 6 fait saillie latéralement par rapport aux deux autres plaques 4 et 8.

Les lignes Linf1a sont sensiblement décalées latéralement par rapport aux fentes 32 vers l'extérieur des cellules pour ménager le bord rectiligne 28 où la plaque 8 fait saillie latéralement par rapport au deux autres plaques 4 et 6, tandis que les lignes Linf1b s'étendent sensiblement au-dessus des fentes 32 dans la plaque 8.

Le traçage de ces lignes de rupture sur les plaques 4 et 8 est réalisé de façon classique, par exemple au moyen d'un outil au diamant.

Après cette étape de formation des rayures, le lot peut être aisément divisé en cellules individuelles par cassure des plaques 4 et 8 selon les lignes Lsup1a, Lsup1b, Lsup2a et Lsup2b et respectivement selon les lignes Linf1a, Linf1b, Linf2a et Linf2b. Simultanément, les zones de moindre résistance 30 de la plaque 6 se brisent, ce qui libère les cellules 2 du reste de la plaque 6.

Le contour de chaque cellule individuelle 2 est ébavuré de préférence au moins dans la zone de rupture 30 du substrat intermédiaire.

Ensuite, chaque cellule 2 est traitée séparément pour effectuer de façon classique, le remplissage de ses deux cavités par du cristal liquide, puis le scellement des ouvertures de remplissage 18, 20.

Selon une caractéristique intéressante de l'invention, les deux ouvertures de remplissage 18, 20 sont réalisées sur un même bord de chaque cellule 2 et sont espacées latéralement, si bien qu'il est possible de remplir les deux cavités 10, 12 simultanément avec des cristaux liquides de natures différentes. Pour ce faire, on crée un vide dans chacune des deux cavités 10, 12 puis on dispose le bord de la cellule 2 comportant les ouvertures de remplissage 18, 20 dans bacs remplis de cristaux liquides. Les cavités 10, 12 se remplissent alors par capillarité à partir des bacs.

Selon une variante non représentée de réalisation du procédé de l'invention, l'étape de division du lot 1 de cellules 2 peut comprendre une étape intermédiaire au cours de laquelle le lot 1 est divisé en plusieurs sous-ensembles en forme de bandes rectilignes. Chaque sous-ensembles peut comprendre une ou deux rangées de cellules 2 de sorte que chaque cellule 2 comporte au moins un bord rectiligne formé par un bord de la bande. En ménageant les ouvertures de remplissage 18, 20 des cellules de la seconde rangée sur le côté opposé à celles de la première rangée, il est possible de réaliser le remplissage simultané d'une pluralité de cellules 2 de chaque rangée avant de séparer les cellules de façon définitive.

Dans le cadre de la présente invention, on entend englober aussi le cas où les cellules 2 comprennent plus d'un substrat intercalaire. Dans ce cas chaque plaque dans laquelle sont réalisés les substrats intercalaires est préparée conformément à la plaque 6 décrite ci-dessus.

Dans le cadre de la présente invention, on entend en outre englober aussi le cas où l'on fabrique un ensemble de cellules photovoltaïques, par exemple du type électrochimique à au moins trois substrats. Des cellules de ce genre à deux substrats sont décrites par exemple dans les publications WO 91/16719 et WO 95/18456. Par conséquent, il est possible de fabriquer entièrement un lot de cellules remplies par les méthodes connues, puis de diviser le lot comme cela vient d'être décrit ci-dessus.

On pourra également envisager de fabriquer un ensemble de cellules multiples tel que défini ci-dessus, chaque cellule individuelle comprenant une première cavité remplie de cristaux liquides et une deuxième cavité comprenant un système physico-chimique capable d'absorber de la lumière et d'engendrer aux bornes des électrodes auquel il est associé une tension électrique. Un tel système est décrit par exemple dans les publications WO 91/16719 et WO 95/18456.

## Revendications

1. Procédé de fabrication collective d'un lot de cellules électro-optiques ou photovoltaïque individuelles multiples, chaque cellule comportant:
- au moins deux cavités remplies d'un liquide et délimitées chacune par un cadre de scellement disposé entre un substrat extérieur et un substrat intercalaire
- des électrodes ménagées sur la surface de chaque substrat tournée vers l'autre substrat,
le procédé étant caractérisé en ce qu'il comporte au moins les étapes suivantes:
(a) se munir d'au moins une plaque intercalaire commune à toutes les cellules et dans laquelle le substrat intercalaire de chaque cellule sera formé et de première et deuxième plaques extérieures également communes à toutes les cellules et dans lesquelles seront formés respectivement les deux substrats extérieurs, la plaque intercalaire et au moins la première ou la deuxième plaque extérieure étant transparentes;
(b) former sur les faces des première et deuxième plaques extérieures et de la plaque intercalaire destinées à venir en regard l'une de l'autre un réseau de jeux d'électrodes, chaque jeu d'électrodes étant associé à une cellule individuelle;
(c) déposer sur au moins une desdites faces destinées à venir en regard l'une de l'autre une matière de scellement pour former une pluralité de cadres de scellement, chacun d'eux étant associé à une cellule individuelle;
(d) réaliser une zone de moindre résistance mécanique le long du contour de chaque cellule individuelle dans la plaque intercalaire;
(e) combiner la plaque intercalaire à chacune des première et deuxième plaques extérieures de sorte que lesdits réseaux d'électrodes portés par les première et deuxième plaques extérieures coopèrent avec les réseaux d'électrodes portés par la plaque intercalaire;
(f) assujettir les première et deuxième plaques à la plaque intercalaire à l'aide de la matière de scellement,
(g) former des rayures délimitant le contour de chaque cellule individuelle sur la surface extérieure des première et deuxième plaques extérieures;
(h) diviser le lot en cellules individuelles par cassure des première et deuxième plaques extérieures et de la plaque intercalaire le long du contour de chaque cellule;
(i) remplir avec un liquide les cavités de chaque cellule individuelle, les cavités étant définies par les première et deuxième plaques, la plaque intercalaire et les cadres de scellement,

2. Procédé selon la revendication 1, caractérisé en ce que ladite zone de moindre résistance mécanique est formée par découpage d'une fente continue ou discontinue le long du contour de chaque double cellule de sorte qu'une partie centrale formant le substrat intercalaire est reliée au reste de la plaque intercalaire par au moins un pont de matière.

3. Procédé selon la revendication 2, caractérisé en ce la partie centrale découpée formant le substrat intercalaire est reliée au reste de la plaque intercalaire par quatre ponts de matière.

4. Procédé selon la revendication 1 ou 2, caractérisé en ce que ladite zone de moindre résistance est formée par découpage le long du contour de chaque cellule d'une pluralité de fentes faiblement espacées les unes des autres.

5. Procédé selon la revendication 4, caractérisé en ce que l'étape (h) de division du lot de cellules comprend une étape intermédiaire consistant à diviser ledit lot en plusieurs bandes comprenant chacune une ou deux rangées de cellules de sorte que chaque cellule comporte au moins un bord rectiligne formé par un bord de la bande.

6. Procédé selon la revendication 5, caractérisé en ce que la division en bandes est faite avant l'étape de remplissage des cellules.

7. Procédé selon l'une quelconque des revendications précédentes, caractérisé en ce qu'au cours de l'étape (c), une ouverture de remplissage est ménagée pour chaque cavité de chaque cellule individuelle.

8. Procédé selon la revendication 7, caractérisé en ce que chaque cellule présente un bord rectiligne et en ce que les ouvertures de remplissage d'une même cellule sont réalisées sur ce bord et espacées latéralement l'une de l'autre.

9. Procédé selon la revendication 1, caractérisé en ce que lesdites première et deuxième plaques et la plaque intercalaire sont réalisées en verre.

10. Procédé selon l'une quelconque des revendications précédentes, caractérisé en ce qu'il comporte en outre une étape d'ébavurage du contour de chaque cellule individuelle au moins dans la zone de cassure du substrat intercalaire.

11. Procédé selon l'une quelconque des revendications précédentes, caractérisé en ce qu'une première cavité est remplie de cristaux liquides et en ce qu'une deuxième cavité comprend un système physico-chimique capable d'absorber de la lumière et d'engendrer aux bornes des électrodes auquel il est associé une tension électrique.
